(19) Europäisches Patentamt
European Patent Office
Office européen des brevets

(11)　**EP 1 617 572 B1**

(12)　　**EUROPEAN PATENT SPECIFICATION**

(45) Date of publication and mention
of the grant of the patent:
**25.11.2009　Bulletin 2009/48**

(51) Int Cl.:
**H04B 7/155** (2006.01)　　**H04B 7/26** (2006.01)

(21) Application number: **05008279.1**

(22) Date of filing: **15.04.2005**

(54) **Single-frequency relay for removing multi-path interference in a wireless communication system, and method**

Gleichfrequenzrelaisstation zur Entfernung von Störungen verursacht durch Mehrwegausbreitung in einem drahtloses Kommunikationssystem, und Verfahren

Répétiteur à fréquence unique pour la compensation des interférences à trajets multiples dans un système de communication sans fil, et procédé

(84) Designated Contracting States:
**AT BE BG CH CY CZ DE DK EE ES FI FR GB GR HU IE IS IT LI LT LU MC NL PL PT RO SE SI SK TR**

(30) Priority: **14.07.2004　KR 2004054727**

(43) Date of publication of application:
**18.01.2006　Bulletin 2006/03**

(73) Proprietor: **RF Window Co., Ltd.**
**Guro-gu,**
**Seoul 152-780 (KR)**

(72) Inventors:
　• **Lee, Seong Jae**
　**Ganseo-gu**
　**Seoul 157-010 (KR)**

　• **Song, Ju Tae**
　**Seoul 152-780 (KR)**
　• **Kang, Hyun**
　**Incheon 467-801 (KR)**

(74) Representative: **Schumacher & Willsau**
**Patentanwaltsgesellschaft mbH**
**Nymphenburger Strasse 42**
**80335 München (DE)**

(56) References cited:
**EP-A- 0 801 474　　EP-A- 1 039 715**
**EP-A- 1 239 610　　EP-A- 1 261 148**

## Description

### Technical Field

The present invention relates to a relay system for relaying wireless signals from a base station to a terminal, said relay system comprising: a receiving antenna for receiving wireless signals; a first band-pass filter for filtering the signals from the receiving antenna; a low noise amplifier for amplifying the signals from the first band-pass filter; a down-converter for down-converting the signals from the low noise amplifier to obtain an intermediary frequency signal; a digital signal processing circuit comprising an A/D-converter, a multi-path cancellation controller and a D/A-converter; the A/D-converter converting the intermediary frequency signal to a digital signal, the multi-path cancellation controller canceling multi-path interference present in the digital signal, and the D/A-converter converting the interference cancelled digital signal to an interference cancelled analog signal; an up-converter for up-converting the interference cancelled analog signal to a radio frequency signal; a linear power amplifier for amplifying the up-converted signal; a second band-pass filter for filtering the amplified radio frequency signal; and a transmitting antenna for transmitting the signal from the second band-pass filter.

The present invention further relates to a method for relaying wireless signals from a base station to a terminal, said method comprising the following steps: receiving wireless signals with a receiving antenna; filtering the signals from the receiving antenna with a first band-pass filter; amplifying the signals from the first band-pass filter with a low noise amplifier; down-converting the signals from the low noise amplifier with a down-converter to obtain an intermediary frequency signal; providing a digital signal processing circuit comprising an A/D-converter, a multi-path cancellation controller and a D/A-converter; the A/D-converter converting the intermediary frequency signal to a digital signal, the multi-path cancellation controller canceling multi-path interference present in the digital signal, and the D/A-converter converting the interference cancelled digital signal to an interference cancelled analog signal; up-converting the interference cancelled analog signal to a radio frequency signal with an up-converter; amplifying the up-converted signal with a linear power amplifier; filtering the amplified radio frequency signal with a second band-pass filter; and transmitting the signal from the second band-pass filter with a transmitting antenna. The present invention overcomes extension of service coverage and a dead spot with amplifying same channel frequency, a problem of the relay system is a same channel frequency interference of RF (Radio Frequency) output which is become feedback radiating from tx (transmission) antenna to rx (reception) antenna of the relay system, the wireless relay system apparatus and method effectively eliminates the same frequency interference so that is can ensure an additional system gain and easy to set up relatively to general same frequency relay system. It is a purpose of the present invention to provide a relay system and a method for relaying wireless signals, in which RF signal components eventually launched into the RF signal within the up converter and a non-linearity eventually inherent to the power amplifier can be considered when the multi-path interference cancellation is performed.

### Background Art

This present invention relates to a wireless relay system apparatus and method for a multi-path interference removing using by same channel frequency. More specifically, the invention relates to a relay system apparatus and method to relay wireless signal of high generating power and high purity for tx (transmission) and interference isolation of relay branch office.

The relay system is located between a base wireless station and a terminal, which is an apparatus to provide for a good quality of communications entering the power station environment by amplification of low rx (reception) level in a dead spot such as an inside of building or out of town.

EP 1 261 148 A describes a relay system for relaying wireless signals from a base station to a terminal, wherein a cancellation of interference is performed on the basis of a signal gripped in front of an up converter and an amplifier arranged downstream thereof.

US 4,947,361 A describes an adaptive noise cancellation system comprising an amplitude and delay estimator processing a reference signal and a 90°-phase-shifted reference signal with a following summation of said reference signals.

### Disclosure of Invention

### Technical Problem

Types of the relay system have been included optical relay system, microwave relay system, frequency conversion relay system, RF relay system, and so on about a wireless relay system which have been repeated using by same channel frequency, in general, a case of an optical relay system has captured RF signal and converted into optic signal and transmitted it to via optic cable from cell site, which was a cause of a high cost by via optic cable and the limit of installation for an additional optical conversion module, and a microwave relay system has been needed a microwave conversion module because its rx was using a microwave between the cell site and the relay system, after installation of microwave conversion module, there was a limit of the use of the microwave relay system for a quality of service because of snowing, raining, fogging, and so on. Also, a frequency conversion relay system has been used a different channel between the cell site and the relay system, which was a cause of frequency consuming in an additional frequency conversion module and wave efficiency.

In other hand, a case of the relay system replaying same channel frequency has been a cost-effective but the relay system has been a limit of installation because of isolation between tx / rx and increasing of base wireless station interference.

Summarily, therefore, conventional relay system features means for improving isolation of the relay site to be installed a relay to radiate from tx / rx antenna and limitation of use of near far isolating operation. This approach purposely controls and limits the isolation of the relay.

What is still needed is a durable, economical and effective relay system for a multi-path interference removing using by same channel frequency. What is needed is such a system that supplies appropriate levels of relay system for a multi-path interference removing using by same channel frequency.

**Technical Solution**

The present invention relates a wireless relay system apparatus and method for a multi-path interference removing using by same channel frequency, which purpose of the present invention is to overcome extension of service coverage and a dead spot with amplifying same channel frequency, a problem of the relay system is a same channel frequency interference of RF (Radio Frequency) output which is become feedback radiating from tx (transmission) antenna to rx (reception) antenna of the relay system, the wireless relay system apparatus and method effectively eliminates the same frequency interference so that it can ensure an additional system gain and easy to set up relatively to general same frequency relay system.

**Advantageous Effects**

Because this invention such as the can keep separation between send-receive antenna remarkably short removing feedback eruption that happen in relay that signal of high power can do delivery amplifying same channel frequency in communication wide-band by using same channel frequency, establishment is easy and economical than the other relay system and excellent in frequency.

Also, a wireless relay system of the present invention is possible to provide a service by removing many multi-path interference and easy to set up at outdoors of building and telegraph of single pole simply, especially, the area such as outer of downtown, mountains, and shore is that economic performance does not exist to base wireless station as necessary to coverage extension with area.

**Brief Description of the Drawings**

The present invention will become better understand with reference to accompanying drawings which are given only by way of illustration and thus are not limitative of the present invention, wherein;

Figure 1 is a flowchart of wireless relay system with same channel frequency for multi-path interference removing according to the invention.
Figure 2 is a schematic diagram of same channel frequency wireless relay system apparatus according to the invention.
Figure 3 is a schematic diagram of multi-path interference removing signal process according to the invention.
Figure 4 is a flowchart of multi-path interference removing according to the invention.
Figure 5 is an application example of same frequency interference removing according to the invention.
Figure 6 is another application example of same frequency interference removing according to the invention.

**Best Mode for Carrying Out the Invention**

In wireless relay system that get rid of multi-path interference signal using by same channel frequency that comprising, a rx antenna which is receiving same frequency of wireless channel, a rx band pass filter which is only passes received signal through the rx antenna, a rx low noise amplifier which is received RF(Wireless Frequency) signal as needed through the rx band pass filter, a rx down converter which is receiving amplified signal through the rx low noise amplifier, a digital signal process which converts a IF frequency to be able to processes the digital signal in the rx down converter, a rx up converter which converts a clear IF signal to received signal by interference removing from the digital signal process, a linear power amplifier which converts receiving signal to RF signal by the rx up converter, a tx band pass filter which is receiving amplified RF signal by the linear power amplifier, a multi-path interference cancellation controller for wireless relay system using by same channel frequency, which consists of tx antenna for radiating RF signal through the passing filter for transmitting signal.

**Mode for the Invention**

Referring to the Figures, there are shown several, but not the only, for a multi-path interference removing using by same channel frequency.

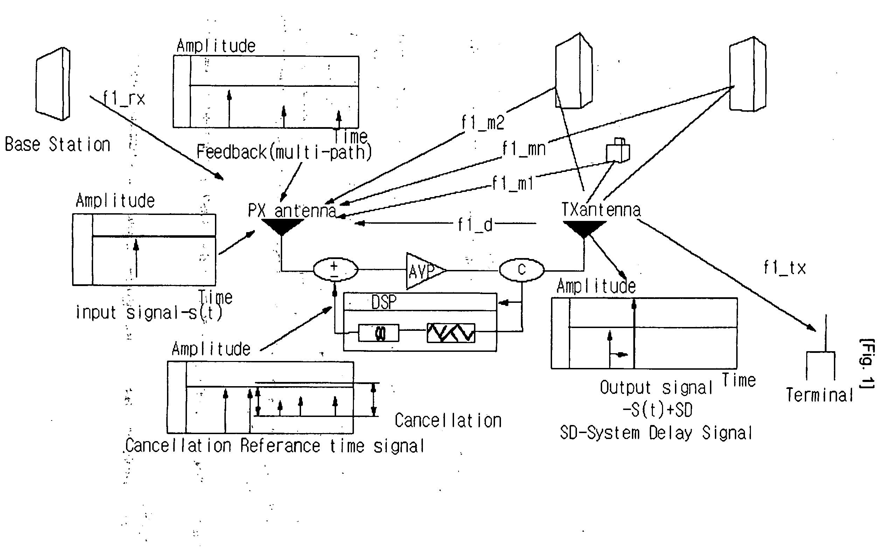

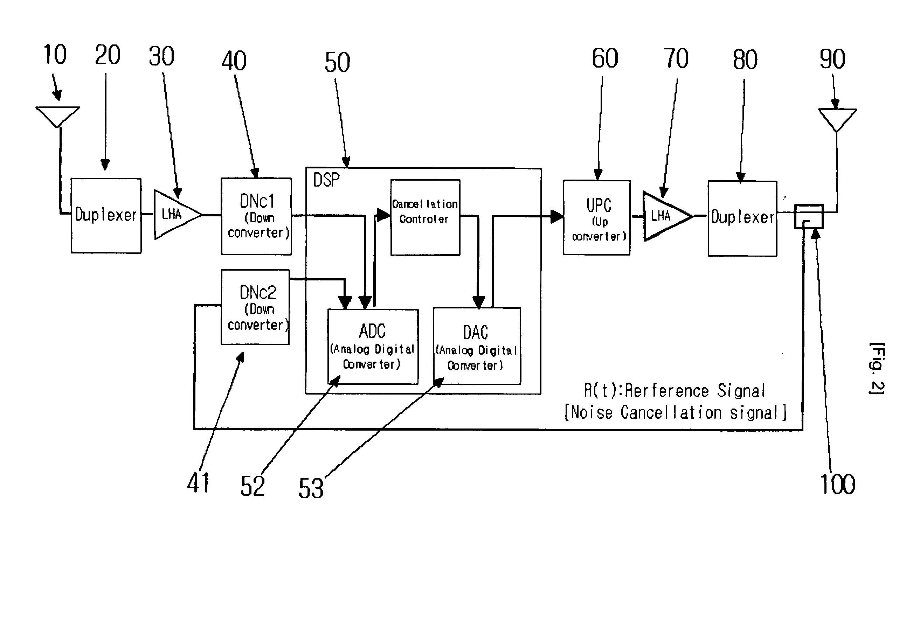

In a wireless replay system using by same channel frequency, as shown Figure 1, which illustrate in outline of a wireless relay system for a multi-path interference removing that receives f1_rx signal from base wireless station to rx antenna (10) of a replay site as shown Figure 2 in the present invention, and amplified signal is passed by rx down converter (40) through rx low noise amplifier (30) as needed input RF received signal through rx band pass filter (20) to pass only received signal, then eliminates interference signal with using a digital signal process (50) which converts to IF frequency that can process digital signal, and then process linear power amplifier (70) to convert an interference removing IF signal to RF through rx up converter (60), and then finally amplify and radiate transmitted RF signal through tx band pass filter (80) and tx antenna (90).

An output which is emitted through tx antenna (90) as in Figure 1, it is provided a service emitted by frequency named f1_tx to terminal, but some tx antenna which is emitted from tx antenna itself, same channel frequency to rx antenna, and f1_d (same frequency direct route) and multi-path interference frequency of f1_m1 ~ f1_mn to rx antenna, which is inputted to become cause of feedback eruption.

To remove f1_d, f1ml ~ f1_mn's interference that is same channel frequency interference as above mentioned, output that rx antenna (90) with Figure 2 is discharged is converted to digital signal being approved to ADC (Analog to Digital Converter) (52) in digital signal process (50) receiving rx antenna or emitted some signal by reference signal IF converter (41) because do coupling (30dBs diminution signal) through monitoring coupler (100) and analyze time delay of each same channel multi-path interference signal in interference cancellation controller (51) using the changed digital signal, and amplitude creates signal that have reverse-phase of equal signal with time delay such as multi-path interference sign of each f1_d, f1_m1 ~ f1_mn hereupon with the construed signal ingredient.

Also, reception signal pass-band filter (20), rx low noise amplifier (30), and reception signal IF converter (rx down converter) (40) through via several device elements in wireless relay system which is inputted base wireless station signal f1_rx and multi-path interference signal f1_d, f1_m1 ~ f1_mn which is inputted through rx antenna (10), that convert to digital signal by ADC (Analog to Digital Converter) (52) within digital signal process (50), and interference signal in the converted signal f1_rx, f1_d, and f1_m1 through f1_mn excepting f1_rx have reference signal is summing by digital signal f1_d and f1_m1 through f1_mn with having same time delay, and amplitude so that it can get rid of multi-path same frequency interference signal.

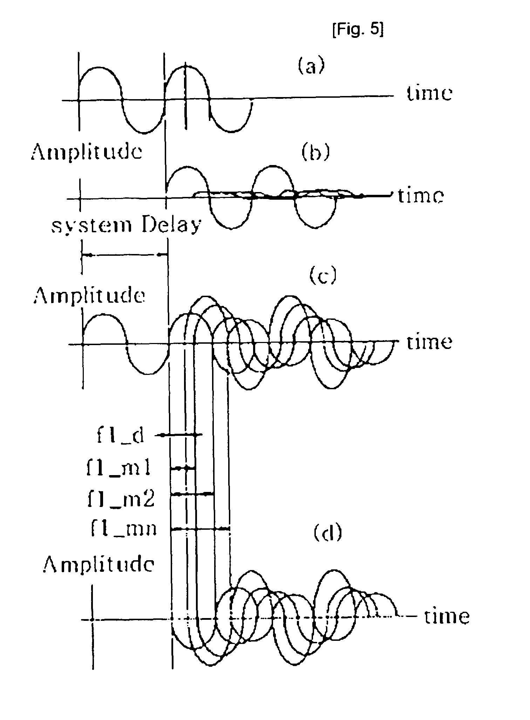

As illustrated to Figure 5 for detailed explanation of this invention, base wireless station signal as named f1_rx of a) is reception signal and pure base wireless station signal without inputted interference to rx antenna and does not exist transmission of the output of relay station feedback reception signal, and there is output that interference removing relay station transmission of the output signals f1_tx signal of b) removes same channel multi-path interference of relay and multi-path interference signal of c) is reception signal f1_rx signal and signal that multi-path interference signal is included that is inputted from base wireless station. For removing the signal, multi-path interference signal except f1_rx signal receive reference signal which is coupling signal for removing of the signal in tx antenna and reverse-phase of equal amplitude of d) which is the same such as time delay creation signal for interference removing create and absorbs and gets rid of interference signal.

As the prevent invention, if compare f1_rx reception frequency with f1_tx, it can be as the same channel frequency in case of frequency, but it can be registered to differ as following in case of time.

(a) f1_tx = f1_rx + device system delay time

A signal f1_rx which is received to f1_tx frequency and rx antenna (10) emitted through tx antenna (90), the f1_rx signal can be analyzed by other signal in excepted signal in device system delay time, and the device system delay time refers to amount that become signal delay flowing wireless relay system, and is delayed about minimum number us by saw filter and so on in device. Multi-path interference signal that is same channel interference the delay time is expressed as follows.

(b) f1_d = f1_tx + antenna cable delay + air delay between tx/rx antenna

(c) f1_m1 = f1_tx + antenna cable delay + air delay by reflector 1

(d) f1_m2 = f1_tx + antenna cable delay + air delay by reflector 2

(e) f1_mn = f1_tx + antenna cable delay + air delay by reflector n

If the multi-path interference signal examines in case of time, the multi-path interference signal becomes cause that eruption happens because infinity feedback happens in RF environment with having f1_rx signal and different time delay, and amplitude and phase in rx antenna (10) by being inputted, input signal increase and amplifies into again fixed gain in device and is emitted through tx antenna (90) which is the amplified signal.

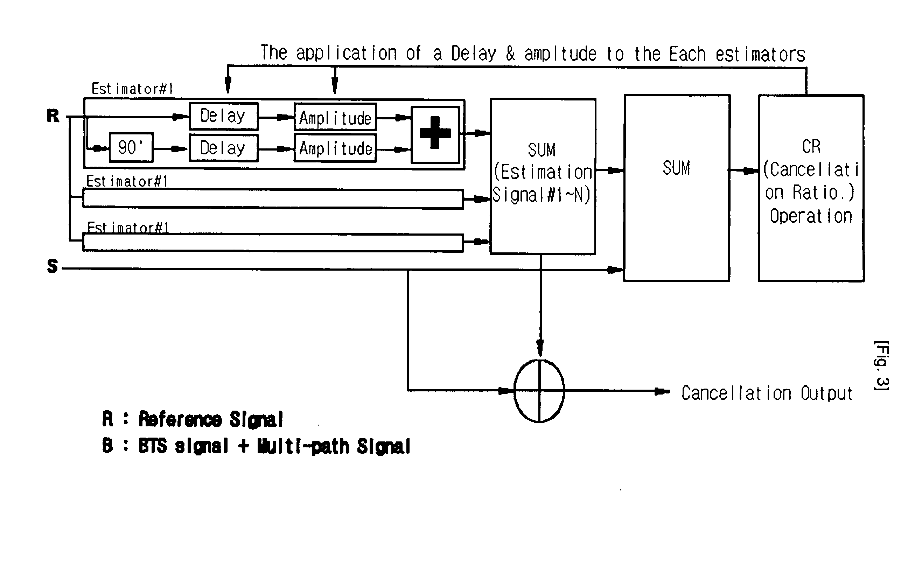

The multi-path interference removing signal that is summing in reception signal by finding tx antenna (90) which is emitted some by algorithm to have equal time delay detecting time delay that can get rid of interference signal of (b), (c), (d), and (e) that is the multi-path interference signal come in estimator #1 through # N in digital signal process of Figure 3 receiving some transmission level using monitoring coupler (100) as sees in Figure 2 to get rid of the multi-path interference signal.

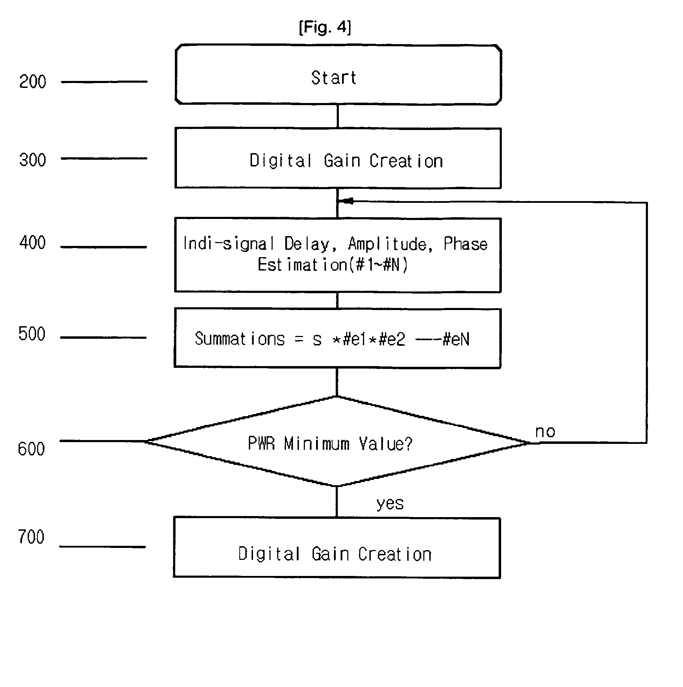

Algorithm to get rid of the multi-path interference signal has achieved continuous algorithm action even if optimum algorithm is applied applying the digital signal gains (700) after multiplex interference confirms value that can be minimized judging interference position (600) in relevant estimator through interference position chase (400) and application (500) because the algorithm is accomplished and changes inside digital signal gains of Figure 3 (300) if power with flowchart of Figure 4 is approved (200).

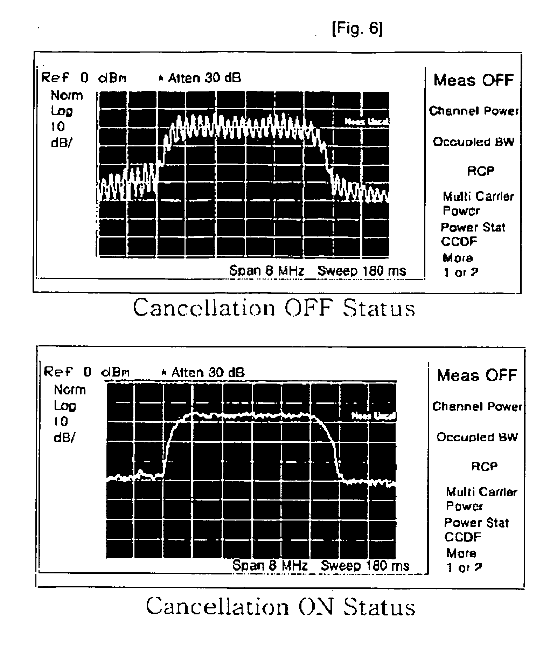

Figure 6 is that interference signal removing algorithm displays power OFF status and ON status through spectrum analyzer. As in Figure 6, the result of same frequency interference removing appears definitely through spectrum analyzer.

The present invention is not limited to the above embodiment but is defined by the scope of the appended claims.

**Claims**

**1.** A relay system for relaying wireless signals from a base station to a terminal, said relay system comprising:

- a receiving antenna (10) for receiving wireless signals;
- a first band-pass filter (20) for filtering the signals from the receiving antenna (10);
- a low noise amplifier (30) for amplifying the signals from the first band-pass filter (20);
- a down-converter (40) for down-converting the signals from the low noise amplifier (30) to obtain an intermediary frequency signal;
- a digital signal processing circuit (50) comprising an A/D-converter (52), a multi-path cancellation controller and a D/A-converter (53); the A/D-converter (52) converting the intermediary frequency signal to a digital signal, the multi-path cancellation controller canceling multi-path interference present in the digital signal, and the D/A-converter converting the interference cancelled digital signal to an interference cancelled analog signal;
- an up-converter (60) for up-converting the interference cancelled analog signal to a radio frequency signal;
- a linear power amplifier (70) for amplifying the up-converted signal;
- a second band-pass filter (80) for filtering the amplified radio frequency signal; and
- a transmitting antenna (90) for transmitting the signal from the second band-pass filter (80),

**characterized in that** the multi-path cancellation is performed on the basis of a plurality of amplitude and delay estimators (#1, #2, #N), wherein each of the amplitude and delay estimators (#1, #2, #N) processes a reference signal (R) and a 90° phase shifted reference signal, and wherein the reference signal (R) is derived from the signal fed to the transmitting antenna (90).

**2.** A relay system according to claim1, **characterized in that** processed reference signals (R) generated by the amplitude and delay estimators (#1, #2, #N) are added.

**3.** A relay system according to claim 1 or 2, **characterized in that** a digital signal gain (700) is generated based on a minimum of the multi-path interference (PWR minimum).

**4.** A relay system according to claim 1, comprising a down converter (41) for down-converting the reference signal (R).

**5.** A method for relaying wireless signals from a base station to a terminal, said method comprising the following steps:

a) receiving wireless signals with a receiving antenna (10);
b) filtering the signals from the receiving antenna (10) with a first band-pass filter (20);
c) amplifying the signals from the first band-pass filter (20) with a low noise amplifier (30);

d) down-converting the signals from the low noise amplifier (30) with a down-converter (40) to obtain an intermediary frequency signal;

e) providing a digital signal processing circuit (50) comprising an A/D-converter (52), a multi-path cancellation controller and a D/A-converter (53); the A/D-converter (52) converting the intermediary frequency signal to a digital signal, the multi-path cancellation controller canceling multi-path interference present in the digital signal, and the D/A-converter converting the interference cancelled digital signal to an interference cancelled analog signal;

f) up-converting the interference cancelled analog signal to a radio frequency signal with an up-converter (60);

g) amplifying the up-converted signal with a linear power amplifier (70);

h) filtering the amplified radio frequency signal with a second band-pass filter (80); and

i) transmitting the signal from the second band-pass filter (80) with a transmitting antenna (90);

**characterized in that** step e) comprises: performing the multi-path cancellation on the basis of a plurality of amplitude and delay estimators (#1, #2, #N), wherein each of the amplitude and delay estimators (#1, #2, #N) processes a reference signal (R) and a 90° phase shifted reference signal, and wherein the reference signal (R) is derived from the signal fed to the transmitting antenna (90).

6. A method according to claim 5, applying the formulae

$$f1\_d = f1\_tx + \text{antenna cable delay} + \text{air delay between tx / rx antenna,}$$

$$f1\_m1 = f1\_tx + \text{antenna cable delay} + \text{air delay by reflector 1,}$$

$$f1\_m2 = f1\_tx + \text{antenna cable delay} + \text{air delay by reflector 2,}$$

$$f1\_mn = f1\_tx + \text{antenna cable delay} + \text{air delay by reflector n}$$

for canceling said multi-path interference.

7. A method according to claim 5, comprising the step of down converting the reference signal (R) with a down converter (41).

8. A method according to claim 5, comprising the step of generating a digital signal gain (700) based on a minimum of the multi-path interference (PWR minimum).

**Patentansprüche**

1. Ein Relaissystem zur Weitergabe drahtloser Signale von einer Basisstation an ein Endgerät, wobei das Relaissystem folgendes umfasst:

- eine Empfangsantenne (10) zum Empfangen drahtloser Signale;
- einen ersten Bandpassfilter (20) zum Filtern der Signale von der Empfangsantenne (10);
- einen rauscharmen Verstärker (30) zum Verstärken der Signale von dem ersten Bandpassfilter (20);
- einen Abwärtswandler (40) zum Abwärtswandeln der Signale von dem rauscharmen Verstärker (20), um ein Zwischenfrequenzsignal zu erhalten;
- eine Digitalsignal-Verarbeitungsschaltung (50), die einen A/D-Wandler (52), einen Mehrwege-Beseitigungscontroller und einen D/A-Wandler (53) umfasst; wobei der A/D-Wandler (52) das Zwischenfrequenzsignal in ein digitales Signal umwandelt, der Mehrwege-Beseitigungscontroller eine in dem digitalen Signal vorhandene Mehrwege-Interferenz beseitigt, und der D/A-Wandler das interferenzbereinigte digitale Signal in ein interferenzbereinigtes analoges Signal umwandelt;
- einen Aufwärtswandler (60) zum Aufwärtswandeln des interferenzbereinigten analogen Signals in ein Radiofrequenzsignal;
- einen linearen Leistungsverstärker (70) zum Verstärken des aufwärtsgewandelten Signals;
- einen zweiten Bandpassfilter (80) zum Filtern des verstärkten Radiofrequenzsignals; und
- eine Sendeantenne (90) zum Aussenden des Signals von dem zweiten Bandpassfilter (80),

**dadurch gekennzeichnet, dass** die Mehrwege-Beseitigung auf der Grundlage einer Vielzahl von Amplituden- und Verzögerungsschätzern (#1, #2, #N) durchgeführt wird, wobei jeder der Amplituden- und Verzögerungsschätzer (#1, #2, #N) ein Bezugssignal (R) und ein 90°-phasenverschobenes Bezugssignal verarbeitet, und wobei das Bezugssignal (R) von dem der Sendeantenne (90) zugeführten Signal abgeleitet ist.

2. Relaissystem gemäß Anspruch 1, **dadurch gekennzeichnet, dass** verarbeitete Bezugssignale (R), die von den Amplituden- und Verzögerungsschätzern (#1, #2, #N) erzeugt werden, addiert werden.

3. Relaissystem gemäß Anspruch 1 oder 2, **dadurch gekennzeichnet, dass** eine Digitalsignal-Verstärkung (700) auf der Grundlage eines Minimums der Mehrwege-Interferenz (PWR-Minimum) erzeugt wird.

4. Relaissystem gemäß Anspruch 1, welches einen Abwärtswandler (41) zum Abwärtswandeln des Bezugssignals (R) umfasst.

5. Verfahren zur Weitergabe drahtloser Signale von einer Basisstation zu einem Endgerät, wobei das Verfahren die folgenden Schritte umfasst:

   a) Empfangen drahtloser Signale mit einer Empfangsantenne (10);
   b) Filtern der Signale von der Empfangsantenne (10) mit einem ersten Bandpassfilter (20);
   c) Verstärken der Signale von dem ersten Bandpassfilter (20) mit einem rauscharmen Verstärker (30);
   d) Abwärtswandeln der Signale von dem rauscharmen Verstärker (30) mit einem Abwärtswandler (40), um ein Zwischenfrequenzsignal zu erhalten;
   e) Bereitstellen eines Digitalsignal-Verarbeitungsschaltkreises (50), der einen A/D-Wandler (52), einen Mehrwege-Beseitigungscontroller und einen D/A-Wandler (53) umfasst; wobei der A/D-Wandler (52) das Zwischenfrequenzsignal in ein digitales Signal umwandelt, der Mehrwege-Beseitigungscontroller eine in dem digitalen Signal vorhandene Mehrwege-Interferenz beseitigt, und der D/A-Wandler das interferenzbereinigte digitale Signal in ein interferenzbereinigtes analoges Signal umwandelt;
   f) Aufwärtswandeln des interferenzbereinigten analogen Signals in ein Radiofrequenzsignal mit einem Aufwärtswandler (60);
   g) Verstärken des aufwärtsgewandelten Signals mit einem linearen Leistungsverstärker (70);
   h) Filtern des verstärkten Radiofrequenzsignals mit einem zweiten Bandpassfilter (80); und
   i) Aussenden des Signals von dem zweiten Bandpassfilter (80) mit einer Sendeantenne (90);

**dadurch gekennzeichnet, dass** der Schritt e) folgendes umfasst: Durchführen der Mehrwege-Beseitigung auf der Grundlage einer Vielzahl von Amplituden und Verzögerungsschätzern (#1, #2, #N), wobei jeder der Amplituden- und Verzögerungsschätzer (#1, #2, #N) ein Bezugssignal (R) und ein 90°-phasenverschobenes Bezugssignal verarbeitet, und wobei das Bezugssignal (R) von dem der Sendeantenne (90) zugeführten Signal abgeleitet ist.

6. Verfahren gemäß Anspruch 5, in welchem die Formel

f1_d = f1_tx + Antennenkabel-Laufzeit + Luft-Laufzeit zwischen tx/rx-Antenne,

f1_m1 = f1_tx + Antennenkabel-Laufzeit + Luft-Laufzeit von Reflektor 1,

f1_m2 = f1_tx + Antennenkabel-Laufzeit + Luft-Laufzeit von Reflektor 2,

## f1_mn = f1_tx + Antennenkabel-Laufzeit + Luft-Laufzeit von Reflektor n,

zum Beseitigen der Mehrwege-Interferenz verwendet wird.

**7.** Verfahren gemäß Anspruch 5, welches den Schritt eines Abwärtswandelns des Bezugssignals (R) mit einem Abwärtswandler (41) umfasst.

**8.** Verfahren gemäß Anspruch 5, welches den Schritt eines Erzeugens einer Digitalsignal-Verstärkung (700) auf der Grundlage eines Minimums der Mehrweginterferenz (PWR-Minimum) umfasst.

**Revendications**

**1.** Système de relais pour relayer des signaux sans-fil d'une station de base à un terminal, le système de relais comprenant:

- une antenne réceptrice (10) pour recevoir des signaux sans-fil;
- un premier filtre passe-bande (20) pour filtrer les signaux de l'antenne réceptrice (10);
- un amplificateur à faible bruit (30) pour amplifier les signaux du premier filtre passe-bande (20);
- un convertisseur abaisseur (40) pour convertir les signaux de l'amplificateur à faible bruit (30) vers le bas afin d'obtenir un signal à fréquence intermédiaire;
- un circuit de traitement de signal numérique (50) comprenant un convertisseur A/D (52), un contrôleur d'annulation multivoie et un convertisseur D/A (53); le convertisseur A/D (52) convertissant le signal à fréquence intermédiaire en un signal numérique, le contrôleur d'annulation multivoie annulant une interférence multivoie présente dans le signal numérique, et le convertisseur D/A (53) convertissant le signal numérique à interférence annulée en un signal analogue à interférence annulée;
- un convertisseur élévateur (60) pour convertir le signal analogue à interférence annulée vers le haut en un signal radiofréquence;
- un amplificateur de puissance linéaire (70) pour amplifier le signal converti vers le haut;
- un deuxième filtre passe-bande (80) pour filtrer le signal radiofréquence amplifié; et
- une antenne émettrice (90) pour émettre le signal du deuxième filtre passe-bande (80),

**caractérisé en ce que** l'annulation multivoie est effectuée sur la base d'une pluralité d'estimateurs d'amplitude et de retard (#1, #2, #N), chacun des estimateurs d'amplitude et de retard (#1, #2, #N) traitant un signal de référence (R) et un signal de référence décalé en phase de 90°, le signal de référence (R) étant dérivé du signal amené à l'antenne émettrice (90).

**2.** Système de relais selon la revendication 1, **caractérisé en ce que** des signaux de référence traités, générés par les estimateurs d'amplitude et de retard (#1, #2, #N), sont additionnés.

**3.** Système de relais selon la revendication 1 ou 2, **caractérisé en ce qu'**une amplification de signal numérique (700) est générée sur la base d'un minimum de l'interférence multivoie (minimum PWR).

**4.** Système de relais selon la revendication 1, comprenant un convertisseur abaisseur (41) pour convertir le signal de référence (R) vers le bas.

**5.** Procédé pour relayer des signaux sans-fil d'une station de base à un terminal, le procédé comprenant les étapes suivantes:

a) recevoir des signaux sans-fil avec une antenne réceptrice (10);
b) filtrer les signaux de l'antenne réceptrice (10) avec un premier filtre passe-bande (20);
c) amplifier les signaux du premier filtre passe-bande (20) avec un amplificateur à faible bruit (30);
d) convertir les signaux de l'amplificateur à faible bruit (30) vers le bas avec un convertisseur abaisseur (40) afin d'obtenir un signal à fréquence intermédiaire;
e) mettre à disposition un circuit de traitement de signal numérique (50) comprenant un convertisseur A/D (52), un contrôleur d'annulation multivoie et un convertisseur D/A (53); le convertisseur A/D (52) convertissant le signal de fréquence intermédiaire en un signal numérique, le contrôleur d'annulation multivoie annulant une interférence multivoie présente dans le signal numérique et le convertisseur D/A convertissant le signal numérique à interférence annulée en un signal analogue à interférence annulée;

f) convertir le signal analogue à interférence annulée vers le haut en un signal radiofréquence avec un convertisseur élévateur (60);

g) amplifier le signal converti vers le haut avec un amplificateur de puissance linéaire (70);

h) filtrer le signal radiofréquence amplifié avec un deuxième filtre passe-bande (80); et

i) émettre le signal du deuxième filtre passe-bande (80) avec une antenne émettrice;

**caractérisé en ce que** l'étape e) comprend: effectuer l'annulation multivoie sur la base d'une pluralité d'estimateurs d'amplitude et de retard (#1, #2, #N), chacun des estimateurs d'amplitude et de retard (#1, #2, #N) traitant un signal de référence (R) et un signal de référence décalé en phase de 90°, le signal de référence (R) étant dérivé du signal amené à l'antenne émettrice (90).

6. Procédé selon la revendication 5, utilisant la formule

$$f1\_d = f1\_tx + \text{retard de câble d'antenne} + \text{retard d'air entre antenne tx / rx,}$$

$$f1\_m1 = f1\_tx + \text{retard de câble d'antenne} + \text{retard d'air par réflecteur 1,}$$

$$f1\_m2 = f1\_tx + \text{retard de câble d'antenne} + \text{retard d'air par réflecteur 2,}$$

$$f1\_mn = f1\_tx + \text{retard de câble d'antenne} + \text{retard d'air par réflecteur n,}$$

pour annuler l'interférence multivoie.

7. Procédé selon la revendication 5, comprenant l'étape de convertir le signal de référence (R) vers le bas avec un convertisseur abaisseur (41).

8. Procédé selon la revendication 5, comprenant l'étape de générer une amplification de signal numérique (700) sur la base d'un minimum de l'interférence multivoie (minimum PWR).

Amplitude

Time

Feedback(multi-path)

f1_rx

Base Station

Amplitude

Time

input signal-s(t)

PX antenna

f1_m2

f1_mn

f1_m1

f1_d

TXantenna

AVP

C

DSP

Amplitude

Time

Output signal
-S(t)+SD
SD-System Delay Signal

f1_tx

Terminal

Amplitude

Cancellation

Cancellation Referance time signal

EP 1 617 572 B1

[Fig. 1]

[Fig. 2]

Duplexer 20
LHA 30
DNc1 (Down converter) 40
DNc2 (Down converter) 41
10

DSP 50
Cancellation Controller
ADC (Analog Digital Converter) 52
DAC (Analog Digital Converter) 53

UPC (Up converter) 60
LHA 70
Duplexer 80
90
100

R(t):Rerference Signal
[Noise Cancellation signal]

The application of a Delay & amplitude to the Each estimators

Estimator#1

R

| Delay | → | Amplitude | → | **+** |

90' | Delay | → | Amplitude |

Estimator#1

Estimator#1

S

SUM
(Estimation
Signal#1~N)

SUM

CR
(Cancellati
on Ratio.)
Operation

Cancellation Output

R : Reference Signal
B : BTS signal + Multi-path Signal

EP 1 617 572 B1

[Fig. 3]

[Fig. 4]

200 ——————— Start

300 ——————— Digital Gain Creation

400 ——————— Indi-signal Delay, Amplitude, Phase
Estimation(#1~#N)

500 ——————— Summations = s *#e1*#e2 ——-#eN

600 ——————— PWR Minimum Value?                              no

yes

700 ——————— Digital Gain Creation

[Fig. 5]

[Fig. 6]

Cancellation OFF Status

Cancellation ON Status

**EP 1 617 572 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1261148 A
- US 4947361 A